# EUROPÄISCHE PATENTSCHRIFT

(11) **EP 1 894 768 B1**
(45) Veröffentlichungstag und Bekanntmachung des Hinweises auf die Patenterteilung: **07.11.2018**
(21) Anmeldenummer: 06018134.4
(22) Anmeldetag: 30.08.2006
(51) Int. Cl.: B60L 11/18, H01M 8/00

(54) **Gleichstromversorgungseinrichtung mit mehreren elektrisch in Serie geschalteten Brennstoffzellen sowie Verfahren zu deren Netzzuschaltung bzw. Netzabschaltung**
DC power supply with multiple serially connected fuel cells and method of connecting to or disconnecting from the supply network
Dispositif d'alimentation en courant continu comportant plusieurs piles à combustible connectées en série et procédé pour brancher et débrancher à un réseau de service

(43) Veröffentlichungstag der Anmeldung: 05.03.2008
(73) Patentinhaber: Siemens Aktiengesellschaft, 80333 München (DE)
(72) Erfinder: Stühler, Walter, 96114 Hirschaid (DE); Voitlein, Ottmar, 91475 Lonnerstadt (DE)

(56) Entgegenhaltungen:
- EP-A2- 1 638 159
- WO-A-01/60655
- US-A- 2004 185 317
- US-A1- 2004 126 635
- US-A1- 2006 068 242

## Beschreibung

Die Erfindung betrifft eine Gleichstromversorgungseinrichtung mit mehreren elektrisch in Serie geschalteten Brennstoffzellen gemäß Oberbegriff des Patentanspruchs 1; eine derartige Gleichstromversorgungseinrichtung ist z.B. aus der WO 02/245247 A2, US 2004/0185317 A1 und EP 1 638 159 A2 bekannt. Die Erfindung betrifft weiterhin ein Verfahren zum Zuschalten einer Gleichstromversorgungseinrichtung zu einem elektrischen Netz gemäß Patentanspruch 7.

Gleichstromversorgungseinrichtungen auf Basis von Brennstoffzellen finden seit einiger Zeit verstärkt Anwendung für die Stromversorgung von elektrischen Netzen in Fahrzeugen, insbesondere Unterwasserfahrzeugen, von Gebäuden und anderer technischer Anlagen. Da eine einzige Brennstoffzelle eine Spannung von lediglich etwa 0,7 bis 0,9 Volt liefert, sind üblicherweise mehrere Brennstoffzellen elektrisch miteinander in Serie geschaltet, um das für die Versorgung des elektrischen Netzes bzw. seiner Verbraucher notwendige Spannungsniveau zu erhalten. Gegebenenfalls kann eine derartige Gleichstromversorgungseinrichtung auch über einen Stromsteller mit dem elektrischen Netz verbunden sein, der den von den Brennstoffzellen erzeugten Gleichstrom in einen Gleichstrom mit dem für das elektrische Netz benötigten Spannungsniveau umwandelt.

Wenn eine Gleichstromversorgungseinrichtung mit mehreren elektrisch in Serie geschalteten Brennstoffzellen an ein elektrisches Netz angeschlossen ist, kann es vorkommen, dass die Spannung des Netzes die von der Gleichstromversorgungseinrichtung aufgebaute Spannung übersteigt. Dies ist beispielsweise dann der Fall, wenn eine oder mehrere der Brennstoffzellen ausgefallen oder abgeschaltet sind. Hierdurch kann Strom aus dem Netz durch die Brennstoffzellen hindurch getrieben werden, was zu einer Umpolung der Brennstoffzellen und somit zu Oxidationsschäden in den Brennstoffzellen führen kann.

Um einen derartigen unerwünschten Stromfluss durch die Brennstoffzellen zu verhindern, ist es aus der WO 02/245247 A2 bekannt, die Brennstoffzellen über eine Schutzeinrichtung in Form einer Leistungsdiode mit dem elektrischen Netz zu verbinden. Die Leistungsdiode ist elektrisch in Serie zu den Brennstoffzellen, d.h. zwischen die Brennstoffzellen und das elektrische Netz, geschaltet. Die Diode ist dabei derart geschaltet, dass ein Stromfluss von dem elektrischen Netz durch die Brennstoffzellen durch die Diode unterbunden. Ein Stromfluss von den Brennstoffzellen in das elektrische Netz und somit eine Zuschaltung der Brennstoffzellen zu dem Netz erfolgt nur dann, wenn die Spannung der in Serie geschalteten Brennstoffzellen die Summe aus der Netzspannung und der Durchlassspannung der Diode überschreitet.

Zum Zeitpunkt der Zuschaltung können sich jedoch noch mehrere Brennstoffzellen in der Startphase befinden, d.h. die Brennstoffzellen haben infolge einer Reaktantenunterversorgung ihre Spannung noch nicht vollständig aufgebaut. Der hierdurch entstehende Stromfluss durch die betreffenden Brennstoffzellen kann zu einer Umpolung der Brennstoffzellen und somit zu deren Beschädigung bis hin zu einem Ausfall führen.

Es ist deshalb Aufgabe vorliegender Erfindung, eine Gleichstromversorgungseinrichtung gemäß Oberbegriff des Patentanspruchs 1 derart weiterzubilden, dass diese Probleme verhindert werden können. Außerdem soll ein Verfahren zum Zuschalten einer Gleichstromversorgungseinrichtung mit mehreren elektrisch in Serie geschalteten Brennstoffzellen zu einem elektrischen Netz sowie ein Verfahren zum Abschalten einer derartigen Gleichstromversorgungseinrichtung von einem elektrischen Netz angegeben werden, mit denen die vorgenannten Probleme verhindert werden können.

Die Lösung der auf die Gleichstromversorgungseinrichtung gerichteten Aufgabe gelingt dadurch, dass die Schutzeinrichtung einen steuerbaren Halbleiterschalter umfasst, der in Serie zu den Brennstoffzellen geschaltet ist. Mittels des Halbleiterschalters kann, beispielsweise durch eine Steuerungseinrichtung, der Stromfluss zwischen den Brennstoffzellen und dem Netz gezielt in Abhängigkeit von dem Betriebszustand der Brennstoffzellen gesteuert und damit unzulässige Belastungen der Brennstoffzellen vermieden werden. So kann beispielsweise ein Stromdurchfluss nur dann ermöglicht werden, wenn sämtliche Brennstoffzellen betriebsbereit, d.h. voll belastbar, sind. Die Brennstoffzellen können hierdurch lastfrei gestartet werden, wodurch unzulässige Belastungen der Brennstoffzellen sicher vermieden werden. Andererseits kann im Betrieb der Gleichstromversorgungseinrichtung bei einer Störung wie z.B. einer Reaktantenunterversorgung ein Stromfluss zwischen der Gleichstromversorgungseinrichtung und den Brennstoffzellen gezielt unterbunden und die Brennstoffzellen hierdurch vor Beschädigungen geschützt werden. Die bisher verwendeten Leistungsdioden müssen hierzu einfach nur durch steuerbare Halbleiterschalter ersetzt werden.

Halbleiterschalter sind zudem geräuschlose Schalter, so dass die Gleichstromversorgungseinrichtung geräuschlos vom Netz getrennt werden kann, was in manchen Anwendungsfällen, z.B. bei einer Verwendung in Unterwasserschiffen, von großer Bedeutung ist. Darüber hinaus sind sie verschleiß- und damit wartungsfrei und ihre Schaltzyklenzahl liegt deutlich über der von mechanischen Schaltern. Auch hierdurch eignen sie sich bevorzugt für die Verwendung in schwer zugänglichen Räumlichkeiten, wie sie beispielsweise auf Unterwasserschiffen vorliegen.

Von Vorteil weist die Gleichstromversorgungseinrichtung eine Steuereinrichtung zum Schalten des Halbleiterschalters in Abhängigkeit von der Ausgangsspannung der Brennstoffzellen auf. Hierdurch kann automatisiert und gezielt die Zuschaltung oder Abschaltung der Brennstoffzellen zu bzw. von dem Netz in Abhängigkeit vorgegebener Schaltkriterien erfolgen, so dass unzulässige Belastungen der Brennstoffzellen sicher vermieden werden können.

Bevorzugt ist die Steuereinrichtung derart ausgebildet ist, dass sie den Halbleiterschalter auf Stromdurchlass schaltet, wenn die Ausgangsspannung sämtlicher Brennstoffzellen oder Gruppen von Brennstoffzellen einen, insbesondere von der Spannung des elektrischen Netzes abhängigen, Grenzwert überschreitet. Für das Schalten des Halbleiterschalters werden somit die zu einem bestimmten Zeitpunkt tatsächlich bei den Brennstoffzellen, vorzugsweise auch in dem Netz, vorliegenden Spannungsverhältnisse berücksichtigt. Hierdurch können unzulässige Belastungen der Brennstoffzellen besonders sicher vermieden werden und es kann gleichzeitig eine möglichst große Verfügbarkeit der Gleichstromversorgungseinrichtung gewährleistet werden.

Es kann hierbei die Ausgangsspannungen jeder einzelnen Brennstoffzelle auf Überschreiten eines Grenzwertes überwacht werden. Es können jedoch auch jeweils Gruppen von Brennstoffzellen überwacht werden. In diesem Fall wird jeweils die Summe der Ausgangsspannungen der Gruppe von Brennstoffzellen auf Überschreiten eines Grenzwertes überwacht. In Gleichstromversorgungseinrichtungen sind üblicherweise jeweils eine Anzahl von elektrisch in Serie geschalteten Brennstoffzellen, d.h. eine Gruppe von Brennstoffzellen, zu einem Brennstoffzellenblock oder Brennstoffzellenmodul zusammengefasst. Eine Gleichstromversorgungseinrichtung besteht dann aus mehreren elektrisch in Serie geschalteten Brennstoffzellenblöcken bzw. -modulen. Es kann dann die Ausgangsspannung eines jeden Brennstoffzellenblocks bzw. -moduls auf Überschreiten eines vorgegeben Grenzwertes überwacht und die in Serie geschalteten Brennstoffzellenblöcke bzw. -module erst dann elektrisch mit dem Netz verbunden werden, wenn die Ausgangsspannungen sämtlicher Brennstoffzellenblöcke bzw. -module einen vorgegeben Grenzwert überschreiten. Wenn der Grenzwert in Abhängigkeit von der tatsächlich vorliegenden Netzspannung gewählt wird, kann eine unzulässige Belastung der Brennstoffzellenblöcke bzw. -module beim Zuschalten besonders sicher vermieden werden.

Weiterhin ist die Steuereinrichtung von Vorteil derart ausgebildet ist, dass sie den Halbleiterschalter auf Stromsperre schaltet, wenn die Ausgangsspannung einer Brennstoffzellen oder Gruppe von Brennstoffzellen einen, insbesondere von der Spannung des elektrischen Netzes abhängigen, Grenzwert unterschreitet. Hierdurch können im Betrieb der Brennstoffzellen bei Störungen, z.B. bei Störungen in der Reaktantenversorgung, und beim Abschalten der Brennstoffzellen unzulässige Belastungen der Brennstoffzellen sicher vermieden werden. können. Wenn der Grenzwert in Abhängigkeit von der tatsächlich vorliegenden Netzspannung gewählt wird, können unzulässige Belastungen der Brennstoffzellen besonders sicher vermieden werden und es kann gleichzeitig eine möglichst große Verfügbarkeit der Gleichstromversorgungseinrichtung gewährleistet werden.

Der Halbleiterschalter kann ein Thyristor sein. Beim Abschalten der Gleichstromversorgungseinrichtung erfolgt das Sperren (Löschen) des Thyistors, sobald die Spannung der Brennstoffzellen unter die Netzspannung und dadurch unter die Haltespannung des Thyristors fällt (z.B. bei einem Abschalten mit Entladewiderstand).

Bevorzugt ist der Halbleiterschalter ein IGBT (Insulated Gate Bipolar Transistor). Hierdurch kann die Gleichstromversorgungseinrichtung bei Störungen durch entsprechende Ansteuerung dessen Gates, z.B. durch eine Steuerungseinrichtung, besonders schnell von der Belastung durch das Netz abgekoppelt werden.

Zweckmäßigerweise sind die Brennstoffzellen in eine oder mehrere Gruppen unterteilt, denen jeweils eine Diode parallel geschaltet ist, so dass bei einem Ausfall einer Brennstoffzellen bzw. Brennstoffzellengruppe der Strom um diese Brennstoffzelle bzw. -gruppe herumgeleitet werden kann. Hierdurch kann verhindert werden, dass bei einem Ausfall einer Brennstoffzelle oder -gruppe der Betrieb der gesamten Gleichstromversorgungseinrichtung zusammenbricht. Außerdem können beim Abschalten der Gleichstromversorgungseinrichtung Entladeströme von noch nicht vollständig entladenen Brennstoffzellen bzw. -gruppen um bereits vollständig entladene Brennstoffzellen bzw. -gruppen herumgeleitet werden und somit der vollständige Verbrauch der Restgase in sämtlichen Brennstoffzellen erleichtert werden.

Aufgrund der bereits erwähnten Vorteile erfolgt die Verwendung der erfindungsgemäßen Gleichstromversorgungseinrichtung vorzugsweise in einem Unterwasserschiff, insbesondere zur Stromversorgung für einen elektrischen Motor zum Antrieb des Unterwasserschiffes.

Bei dem erfindungsgemäßen Verfahren zum Zuschalten einer Gleichstromversorgungseinrichtung mit mehreren in Serie geschalteten Brennstoffzellen zu einem elektrischen Netz wird die Spannung der Brennstoffzellen erfasst und mittels eines steuerbaren Halbleiterschalters eine elektrische Verbindung zwischen den Brennstoffzellen und dem Netz hergestellt, wenn die Ausgangsspannung sämtlicher Brennstoffzellen oder Gruppen von Brennstoffzellen einen, insbesondere von der Spannung des elektrischen Netzes abhängigen, Grenzwert überschreitet.

Bei dem erfindungsgemäßen Verfahren zum Abschalten einer Gleichstromversorgungseinrichtung mit mehreren in Serie geschalteten Brennstoffzellen von einem elektrischen Netz wird die Ausgangsspannung der Brennstoffzellen oder Gruppen von Brennstoffzellen erfasst wird und mittels eines steuerbaren Halbleiterschalters eine elektrische Verbindung zwischen dem elektrischen Netz und den Brennstoffzellen unterbrochen, wenn die Ausgangsspannung einer der Brennstoffzellen oder Gruppen von Brennstoffzellen einen, insbesondere von der Spannung des elektrischen Netzes abhängigen, Grenzwert unterschreitet.

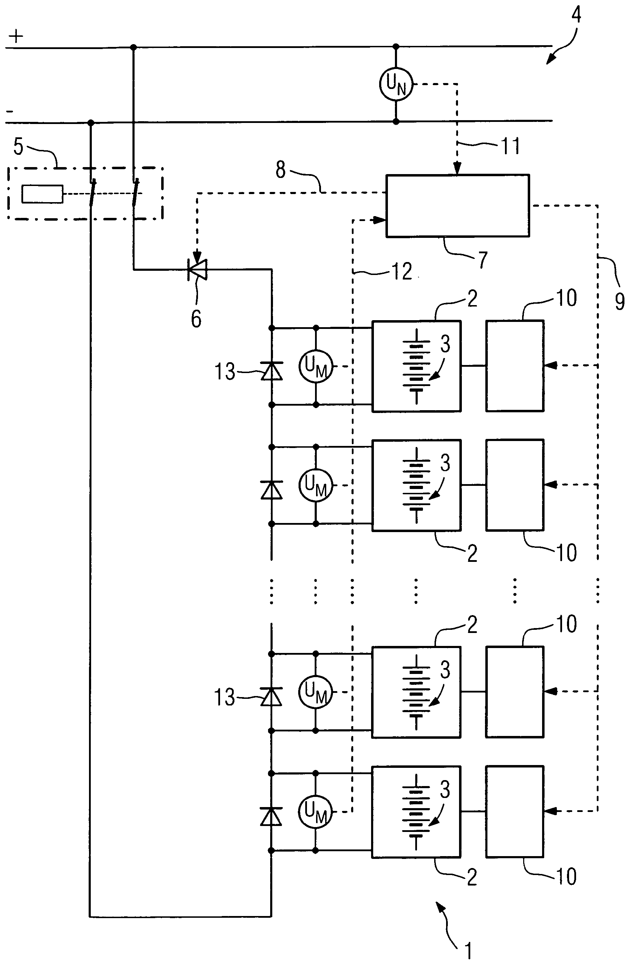

Die Erfindung sowie weitere vorteilhafte Ausgestaltungen der Erfindung gemäß Merkmalen der Unteransprüche werden im Folgenden anhand eines Ausführungsbeispieles in der Figur näher erläutert.

Die Figur zeigt eine Gleichstromversorgungseinrichtung 1 mit mehreren elektrisch in Serie geschalteten Brennstoffzellenmodulen 2, die wiederum jeweils mehrere elektrisch in Serie geschalteten Brennstoffzellen 3 umfassen. In einem Brennstoffzellenmodul 2 ist somit eine Gruppe von elektrisch in Serie geschalteten Brennstoffzellen 3 zusammengefasst. Die Gleichstromversorgungseinrichtung 1 dient zu Stromversorgung für ein elektrisches Gleichstromnetz 4. Bei dem Gleichstromnetz 4 handelt es sich beispielsweise um ein Bordnetz eines Unterwasserschiffes zur Stromversorgung für einen elektrischen Motor zum Antrieb des Unterwasserschiffes. Die Summe der Ausgangsspannungen der Brennstoffzellenmodule 2 liegt etwa im Bereich der Netzspannung U_{N} des Gleichstromnetzes 4. Gegebenenfalls kann zwischen die Gleichstromversorgungseinrichtung 1 und das Netz 4 noch ein DC/DC-Steller geschaltet sein.

Die in Serie geschalteten Brennstoffzellenmodule 2 sind über eine in Serie geschaltete Schutzeinrichtung in Form eines steuerbaren Halbleiterschalters 6, z.B. einem Thyristor oder einem IGBT, und über einen in Serie geschalteten mechanischen Leistungsschalter 5 als Hauptschalter mit dem Netz 4 verbindbar. Der Halbleiterschalter 6 ist derart zwischen die in Serie geschalteten Brennstoffzellenmodule 2 und das Netz 4 geschaltet, dass ein Stromfluss von der Gleichstromversorgungseinrichtung 1 in das Netz 4 möglich ist, wenn die Spannung der in Serie geschalteten Brennstoffzellen die Summe aus der Netzspannung und der Durchlassspannung des Halbleiterschalters 6 überschreitet und ein Ansteuersignal an dem Halbleiterschalter 6 vorliegt, das den Halbleiterschalter 6 auf Stromdurchlass schaltet (d.h. der Halbleiterschalter 6 wird im Bereich seiner Durchlasskennlinie betrieben).

Der Leistungsschalter 5 hat hierbei nur eine Sicherheitsfunktion für den Fall eines Kurzschlusses des Halbleiterschalters 6 (z.B. wenn der Halbleiterschalter 6 durchlegiert). Mit Hilfe des Leistungsschalters 5 können in einem derartigen Fall die Brennstoffzellenmodule 2 von dem Netz 4 weggeschaltet und somit deren ordnungsgemäßes Abschalten ermöglicht werden.

Eine Steuerungseinrichtung 7 ist über eine Steuerleitung 8 mit dem steuerbaren Halbleiterschalter 6 verbunden und schaltet darüber mit Hilfe einer Steuerspannung den Halbleiterschalter 6 auf Stromdurchlass und im Fall eines IGBT auch auf Stromsperre.

Die Steuerungseinrichtung 7 ist weiterhin über Steuerleitungen 9 mit Modulelektroniken 10 verbunden, die den Brennstoffzellenmodulen 2 zugeordnet sind und steuert hierüber den Betrieb der Brennstoffzellenmodule 2 (z.B. das Hochfahren oder Herunterfahren der Brennstoffzellenmodule 2).

Weiterhin erfasst die Steuerungseinrichtung 7 über eine Signalleitung 11 die Netzspannung U_{N} und über Signalleitungen 12 die Ausgangsspannungen U_{M} der einzelnen Brennstoffzellenmodule 2.

Zum Zuschalten der Gleichstromversorgungseinrichtung 1 zu dem Bordnetz 4 veranlasst die Steuerungseinrichtung 7 mit Hilfe eines Startsignales über die Steuerleitungen 9 das Hochfahren der Brennstoffzellenmodule 2. Die Steuerungseinrichtung 7 erfasst während des Hochfahrens die Spannung U_{N} des Netzes 4 und die Ausgangsspannungen U_{M} der Brennstoffzellenmodule 2. Da während der Zeit des Hochfahrens die Netzspannung größer ist als die Summe der Ausgangsspannungen der Brennstoffzellenmodule 2, wird der Halbleiterschalter 6 im Bereich seiner Sperrkennlinie betrieben und somit ein Stromfluss zwischen dem Netz 4 und den Brennstoffzellenmodulen 2 gesperrt. In Abhängigkeit von der Netzspannung U_{N} ermittelt die Steuerungseinrichtung 7 einen Grenzwert für die Ausgangsspannungen U_{M} der einzelnen Brennstoffzellenmodule, ab dem die Brennstoffzellenmodule 2 als betriebsbereit angesehen und auf das Bordnetz 4 geschaltet werden können. Der Grenzwert ist hierbei so gewählt, dass die Summe der Grenzwerte der Ausgangsspannungen U_{M} der Brennstoffzellenmodule größer ist als die Netzspannung U_{N} und die Durchlassspannung des Halbleiterschalters 6.

Die Steuerungseinrichtung 7 überwacht nun die Ausgangsspannungen U_{M} der Brennstoffzellenmodule 2 und erst wenn die Ausgangsspannung U_{M} sämtlicher Brennstoffzellenmodule 2 den Grenzwert erreicht und die Brennstoffzellenmodule 2 somit einen Betriebszustand erreicht haben, ab dem sie belastet werden können, wird über die Leitung 8 der Halbleiterschalter 5 derart angesteuert, dass dieser auf Stromdurchfluss schaltet. Erst hierdurch werden die Brennstoffzellenmodule 2 elektrisch mit dem Bordnetz 4 verbunden und es kann ein Strom von den Brennstoffzellenmodulen 2 in das Bordnetz 4 fließen.

Die Steuerungseinrichtung 7 erfasst auch während des laufenden Betriebes stets die Ausgangsspannungen U_{M} der Brennstoffzellenmodule 2 und die Netzspannung U_{N}. Sobald die Ausgangsspannungen U_{M} eines der Brennstoffzellenmodule 2 einen von der Netzspannung U_{N} abhängigen Grenzwert unterschreitet, wird durch die Steuerungseinrichtung 7 der Stromdurchfluss durch den Halbleiterschalter 6 gesperrt. Hierdurch kann im Falle einer Störung eines Brennstoffzellenmoduls 2, die eine Verringerung der Ausgangspannung des Brennstoffzellenmoduls 2 zur Folge hat, ein unzulässiger Stromfluss durch das Brennstoffzellenmodul 2 und somit dessen Beschädigung sicher verhindert werden.

Sobald die Summe der Ausgangsspannungen U_{M} der Brennstoffzellenmodule 2 die Summe aus der Netzspannung U_{N} und der Durchlassspannung des Halbleiterschalters 6 unterschreitet, wird der Stromdurchfluss durch den Halbleiterschalter 6 gesperrt.

Hierdurch werden die Brennstoffzellenmodule 6 beim Herunterfahren sicher vom elektrischen Netz 4 getrennt, so dass ein unzulässiger Stromfluss durch die Brennstoffzellenmodule 2 und somit deren Beschädigung verhindert werden kann. Im Fall eines IGBT kann der Stromfluss durch den Halbleiterschalter z.B. vor einem Herunterfahren der Brennstoffzellenmodule 2 auch gezielt gesperrt werden und somit die Gleichstromversorgungseinrichtung 1 gezielt vom Netz 4 getrennt werden.

Zu jedem der Brennstoffzellenmodule 2 ist jeweils eine Diode parallel geschaltet, so dass bei Ausfall eines Brennstoffzellenmoduls 2 der Strom um dieses Modul herumgeleitet werden kann bzw. Entladeströme von noch nicht vollständig entladenen Brennstoffzellenmodulen 2 um bereits vollständig entladene Brennstoffzellenmodule 2 herumgeleitet werden können.

Durch die Verwendung des steuerbaren Halbleiterschalters 6 können somit unzulässige Belastungen der Brennstoffzellenmodule 2 sicher vermieden werden. Außerdem kann die Gleichstromversorgungseinrichtung 1 (bei geschlossenem Leistungsschalter 5) bei signaturkritischen Einsätzen mittels des Halbleiterschalters 6 geräuschfrei dem Netz 4 zugeschaltet bzw. von dem Netz 4 abgeschaltet werden.

Bei Verwendung eines IGBTs als Halbleiterschalter 6 kann bei einer Störung eines Brennstoffzellenmoduls 2 die Gleichstromversorgungseinrichtung 1 besonders schnell von dem Netz 4 getrennt werden.

## Patentansprüche

1. Gleichstromversorgungseinrichtung (1) mit mehreren elektrisch in Serie geschalteten Brennstoffzellen (3) und mit einer Schutzeinrichtung, über die die Brennstoffzellen mit einem elektrischen Netz (4) verbindbar sind, wobei die Schutzeinrichtung einen steuerbaren Halbleiterschalter (6) umfasst, der in Serie zu den Brennstoffzellen geschaltet ist, und mit einer Steuereinrichtung (7) zum Schalten des Halbleiterschalters (6) in Abhängigkeit von der Ausgangsspannung der Brennstoffzellen (3), wobei die Steuereinrichtung (7) derart ausgebildet ist, dass sie den steuerbaren Halbleiterschalter auf Stromdurchlass schaltet, wenn die Ausgangsspannung sämtlicher Brennstoffzellen oder Gruppen von Brennstoffzellen einen Grenzwert überschreitet, **dadurch gekennzeichnet, dass** der Grenzwert von der Spannung (U_{N}) des elektrischen Netzes (4) abhängt.

2. Gleichstromversorgungseinrichtung (1) nach Anspruch 1, **dadurch gekennzeichnet, dass** die Steuereinrichtung (7) derart ausgebildet ist, dass sie den steuerbaren Halbleiterschalter auf Stromsperre schaltet, wenn die Ausgangsspannung einer der Brennstoffzellen (3) oder Gruppe von Brennstoffzellen einen, insbesondere von der Spannung (U_{N}) des elektrischen Netzes abhängigen, Grenzwert unterschreitet.

3. Gleichstromversorgungseinrichtung (1) nach einem der vorhergehenden Ansprüche, **dadurch gekennzeichnet, dass** der steuerbare Halbleiterschalter (6) ein Thyristor ist.

4. Gleichstromversorgungseinrichtung (1) nach einem der Ansprüche 1 bis 2, **dadurch gekennzeichnet, dass** der steuerbare Halbleiterschalter (6) ein IGBT ist.

5. Gleichstromversorgungseinrichtung (1) nach einem der vorhergehenden Ansprüche, **dadurch gekennzeichnet, dass** die Brennstoffzellen (3) in eine oder mehrere Gruppen (2) unterteilt sind, denen jeweils eine Diode (13) parallel geschaltet ist.

6. Verwendung der Gleichstromversorgungseinrichtung nach einem der vorhergehenden Ansprüche in einem Unterwasserschiff, insbesondere zur Stromversorgung für einen elektrischen Motor zum Antrieb des Unterwasserschiffes.

7. Verfahren zum Zuschalten einer Gleichstromversorgungseinrichtung (1) mit mehreren elektrisch in Serie geschalteten Brennstoffzellen (3) zu einem elektrischen Netz (4), bei dem die Spannung der Brennstoffzellen (3) erfasst wird und mittels eines steuerbaren Halbleiterschalters (6) eine elektrische Verbindung zwischen den Brennstoffzellen (3) und dem Netz (4) hergestellt wird, dabei wird der steuerbare Halbleiterschalter auf Stromdurchlass geschaltet, wenn die Ausgangsspannung sämtlicher Brennstoffzellen oder Gruppen von Brennstoffzellen (3) einen Grenzwert überschreitet, **dadurch gekennzeichnet, dass** der Grenzwert von der Spannung (U_{N}) des elektrischen Netzes (4) abhängt.

## Claims

1. DC power supply (1) having multiple electrically serially connected fuel cells (3) and having a protection device via which the fuel cells can be connected to an electrical network (4), wherein the protection device comprises a controllable semiconductor switch (6) which is serially connected to the fuel cells, and having a control device (7) for switching the semiconductor switch (6) as a function of the output voltage of the fuel cells (3), wherein the control device (7) is designed such that it switches the controllable semiconductor switch to power-on state when the output voltage of all fuel cells or groups of fuel cells exceeds a limit value, **characterised in that** the limit value depends on the voltage (U_{N}) of the electrical network (4).

2. DC power supply (1) according to claim 1, **characterised in that** the control device (7) is designed such that it switches the controllable semiconductor switch to power-off state when the output voltage of one of the fuel cells (3) or group of fuel cells falls below a limit value, which in particular is dependent on the voltage (U_{N}) of the electrical network.

3. DC power supply (1) according to one of the preceding claims, **characterised in that** the controllable semiconductor switch (6) is a thyristor.

4. DC power supply (1) according to one of claims 1 to 2, **characterised in that** the controllable semiconductor switch (6) is an IGBT.

5. DC power supply (1) according to one of the preceding claims, **characterised in that** the fuel cells (3) are divided into one or more groups (2), to each of which a diode (13) is connected in parallel.

6. Use of the DC power supply according to one of the preceding claims in an underwater vessel, in particular for supplying power for an electric motor for driving the underwater vessel.

7. Method for connecting a DC power supply (1) having multiple electrically serially connected fuel cells (3) to form an electrical network (4), wherein the voltage of the fuel cells (3) is detected and by means of a controllable semiconductor switch (6) an electrical connection is produced between the fuel cells (3) and the network (4), the controllable semiconductor switch being switched to power-on state when the output voltage of all fuel cells or groups of fuel cells (3) exceeds a limit value, **characterised in that** the limit value depends on the voltage (U_{N}) of the electrical network (4).

## Revendications

1. Dispositif (1) d'alimentation en courant continu ayant plusieurs piles (3) à combustible montées en série électriquement et un dispositif de protection, par lequel les piles à combustible peuvent être connectées à un réseau (4) électrique, le dispositif de protection comprenant un interrupteur (6) à semi-conducteurs pouvant être commandé, qui est monté en série avec les piles à combustible, et comprenant un dispositif (7) de commande pour connecter l'interrupteur (6) à semi-conducteurs en fonction de la tension de sortie des piles (3) à combustible, le dispositif (7) de commande étant constitué de manière à mettre l'interrupteur à semi-conducteurs pouvant être commandé à l'état passant, si la tension de sortie de l'ensemble des piles à combustible ou des groupes de piles à combustible dépasse une valeur limite, **caractérisé en ce que** la valeur limite dépend de la tension (U_{N}) du réseau (4) électrique.

2. Dispositif (1) d'alimentation en courant continu suivant la revendication 1, **caractérisé en ce que** le dispositif (7) de commande est constitué de manière à mettre l'interrupteur à semi-conducteurs pouvant être commandé à l'état bloqué, si la tension de sortie de l'une des piles (3) à combustible ou d'un groupe de piles à combustible dépasse une valeur limite, qui dépend de la tension (U_{N}) du réseau électrique.

3. Dispositif (1) d'alimentation en courant continu suivant l'une des revendications précédentes, **caractérisé en ce que** l'interrupteur (6) à semi-conducteurs pouvant être commandé est un thyristor.

4. Dispositif (1) d'alimentation en courant continu suivant l'une des revendications 1 à 2, **caractérisé en ce que** l'interrupteur (6) à semi-conducteurs pouvant être commandé est un IGBT.

5. Dispositif (1) d'alimentation en courant continu suivant l'une des revendications précédentes, **caractérisé en ce que** les piles (3) à combustible sont subdivisées en un groupe ou en plusieurs groupes (2), avec lesquelles est montée en parallèle respectivement une diode (13).

6. Utilisation du dispositif d'alimentation en courant continu suivant l'une des revendications précédentes dans un bâtiment de navigation sous l'eau, notamment pour l'alimentation en courant d'un moteur électrique d'entraînement du bâtiment de navigation sous l'eau.

7. Procédé de branchement d'un dispositif (1) d'alimentation en courant continu ayant plusieurs piles (3) à combustible montées en série électriquement à un réseau (4) électrique, dans lequel on détecte la tension des piles (3) à combustible et, au moyen d'un interrupteur (6) à semi-conducteurs pouvant être commandé, on ménage une connexion électrique entre les piles (3) à combustible et le réseau (4), l'interrupteur à semi-conducteurs pouvant être commandé étant mis à l'état passant, si la tension de sortie de toutes les piles à combustible de tous les groupes de piles (3) à combustible dépasse une valeur limite, **caractérisé en ce que** la valeur limite dépend de la tension (U_{N}) du réseau (4) électrique.
